## Europäisches Patentamt
## European Patent Office
## Office européen des brevets

(11) Veröffentlichungsnummer: **0 469 418 B1**

(12) **EUROPÄISCHE PATENTSCHRIFT**

(45) Veröffentlichungstag der Patentschrift: **12.04.95**

(21) Anmeldenummer: **91112184.6**

(22) Anmeldetag: **20.07.91**

(51) Int. Cl.⁶: **C09C 1/24**, C09D 17/00, C04B 14/30

(54) **Synthetisches Pigment mit dem Farbton der natürlichen ungebrannten Umbra, Verfahren zu seiner Herstellung sowie dessen Verwendung.**

(30) Priorität: **02.08.90 DE 4024566**

(43) Veröffentlichungstag der Anmeldung:
**05.02.92 Patentblatt 92/06**

(45) Bekanntmachung des Hinweises auf die
Patenterteilung:
**12.04.95 Patentblatt 95/15**

(84) Benannte Vertragsstaaten:
**DE ES FR GB IT NL**

(56) Entgegenhaltungen:
DE-A- 3 820 499
GB-A- 583 623
US-A- 4 082 905

(73) Patentinhaber: **Kuske, Peter, Dr.**
**Talring 104**
**D-47802 Krefeld (DE)**

Patentinhaber: **Buxbaum, Gunter, Dr.**
**Holzapfelweg 2**
**D-47802 Krefeld (DE)**

(72) Erfinder: **Kuske, Peter, Dr.**
**Talring 104**
**D-47802 Krefeld (DE)**
Erfinder: **Buxbaum, Gunter, Dr.**
**Holzapfelweg 2**
**D-47802 Krefeld (DE)**

**Beschreibung**

Die vorliegende Erfindung betrifft ein synthetisches Pigment mit dem Farbton der natürlichen ungebrannten Umbra, Verfahren zu seiner Herstellung sowie die Verwendung dieses Pigmentes.

Natürliche Umbren sind je nach Herkunft sehr verschieden in der Zusammensetzung und bestehen aus einem Gemisch verschiedener Mineralien, wie Goethit, Braunstein, Alumosilikaten und kristallinem Quarz. Sie enthalten u.a. etwa 40 % $Fe_2O_3$, 5 bis 10 % $Mn_2O_3$ und 10 bis 20 % $SiO_2$.

Es ist bekannt, daß natürlich vorkommende Pigmente in der Zusammensetzung und der Farbe deutliche Schwankungen zeigen, die sich für viele Anwendungen als negativ erweisen. Weiterhin ist der Gehalt an kristallinem Quarz bei Mengen von mehr als 1,0 % wegen der kanzerogenen Wirkung von entsprechenden Feinstäuben bedenklich. Für solche Staube gilt ein MAK-Wert von 0,15 mg Feststoff pro $m^3$ Luft. Entsprechend dem Californian Safe, Drinking Water and Toxic Enforcement act 1985 (Proposition 65) sind zudem Waren mit Gehalten von mehr als 0,1 % kristallinem Quarz deklarationspflichtig.

Natürliche Umbren werden u.a. in Farben und Lacken, wie z.B. in Dispersionsfarben und Mehrzweckabtonpasten eingesetzt. Oft werden die Umbren als Mischungen mit anderen Pigmenten in verschiedenen Mischungsverhältnissen, wie z.B. zum "Brechen" von Farbtönen verwendet. Für die genannten Anwendungsbereiche ist es sehr wichtig, daß ein entsprechendes synthetisches Pigment in verschiedenen Mischungsverhältnissen (Aufhellungen) von Pigment und Weißpigment der natürlichen Umbra im Farbton entspricht Es hat nicht an Versuchen gefehlt, ein entsprechendes Pigment durch Mischen handelsüblicher Pigmente, insbesondere durch Mischen von Eisenoxiden, nachzustellen. Entsprechende Mischungen, wie z.B. handelsübliche Eisenoxidbraunpigmente zeigen bei zunehmender Aufhellung jedoch eine unerwünschte Farbverschiebung.

Aufgabe der vorliegenden Erfindung ist es daher, ein synthetisches Pigment mit dem Farbton der natürlichen, ungebrannten Umbra zur Verfügung zu stellen, welches die beschriebenen Nachteile nicht aufweist.

Überraschenderweise wurden nun Pigmente gefunden, die diese Anforderungen erfüllen. Sie weisen den Farbton der natürlichen ungebrannten Umbra auf, haben einen Eisenoxidgehalt gerechnet als $Fe_2O_3$ von mehr als 85 Gew.-% und einem Gehalt an kristalliner Kieseläure von weniger als 0,1 Gew.-%, bestehen aus einem Gemisch von synthetischem Magnetitschwarz ($Fe_3O_4$), mindestens einem synthetischen Maghämitbraun ($\gamma$-$Fe_2O_3$) oder Hämatitrot ($\alpha$-$Fe_2O_3$) und zusätzlich einem synthetischen Goethitgelb ($\alpha$-FeOOH) und/oder Lepikrokitorange ($\gamma$-FeOOH), mit einem Farbton, beschrieben in CIELAB-Einheiten durch den Farbwinkel h und die Sättigung C* wobei für h im Purton und für die Aufhellung mit $TiO_2$ im Verhältnis von 1:10 Werte im Bereich von 60 bis 90 liegen, wobei C* 1 bis 20 beträgt.

Die Herstellung der Ausgangssubstanzen ist allgemein bekannt, wie z.B. aus Ullmann Enzyclopädie der technischen Chemie, 4. Auflage, Weinheim (1979), Band 18, Seiten 600-604. Eine bevorzugte Herstellung von Maghämit geht aus der DE-A 3 820 499 hervor.

In einer bevorzugten Ausführungsform sind im erfindungsgemäßen Pigment als wesentliche Bestandteile der Mischung Magnetitschwarz in Mengen von 10 bis 80 Gew.-%, Hämatitrot in Mengen von 0 bis 60 Gew.-%, Maghämitbraun in Mengen von 0 bis 30 Gew.-%, Goethitgelb in Mengen von 1 bis 40 Gew.-% und Lepidokrokitorange in Mengen von 1 bis zu 10 Gew.-% vorhanden.

In einer besonders bevorzugten Variante sind dabei im Gemisch 50 bis 75 Gew.-% Magnetitschwarz, 1 bis 40 Gew.-% Goethitgelb, 0 bis 10 Gew.-% Hämatitrot und 0 bis 30 Gew.-% Maghämitbraun enthalten.

Weiterhin ist der geringe Gehalt löslicher Salze im erfindungsgemäßen Pigmenten vorteilhaft. Nach DIN ISO 787/Teil 8 beträgt er weniger als 1,0 %, bevorzugt 0,5 bis 0,9 %. Der Gehalt löslicher Salze natürlicher Umbren ist mit bis zu 1,5 % deutlich höher und daher für einige Anwendungen nachteilig.

Das erfindungsgemäße Pigment hat bevorzugt einen Eisengehalt, berechnet als $Fe_2O_3$, von 85 bis 99 % und einen Mangangehalt von weniger als 1 %. Der Gehalt an kristallinem Quarz wurde nach mehrmaligem Abrauchen mit Salzsäure sowie nach der Verglühung zum Hämatit bei 800 °C diffraktometrisch bestimmt und beträgt weniger als 0,1 %. Besonders vorteilhaft ist daher der geringe Gehalt an kristallinem Quarz und der geringe Mangangehalt, da im Gegensatz zur natürlichen Umbra für das erfindungsgemäße Pigment keine aufwendigen Maßnahmen zur Vermeidung von Staubemissionen getroffen werden müssen.

Die Pigmentmischungen können in üblicher Weise durch Mischen der verschiedenen Komponenten und Mahlung im Dismembrator bzw. in der Scheibenschwingmühle erhalten werden. Zur Bestimmung der Farbtöne werden die Pigmente sowohl im Purton als auch in verschiedenen Aufhellungen in Alkydal® F 48 oder L 64 (Alkydharze, Handelsprodukte der Bayer AG) gemäß DIN 6174 (äquivalent ISO DIN 7724, 1-3 drafts) farbmetrisch beurteilt Für die Herstellung der Aufhellungen werden jeweils verschiedene Anteile von Pigmenten und $TiO_2$ Bayertitan R-KB-2®, Handelsprodukt der Bayer AG, verwendet. Die Farbwerte werden in CIELAB-Einheiten als Absolutwerte oder im Bezug zu einer handelsüblichen ungebrannten Umbra angegeben.

Der Farbton der erfindungsgemäßen Pigmente liegt in einem Bereich des Farbwinkels (h) im Purton und in der Aufhellung 1:10 mit $TiO_2$ mit Werten von 60 bis 90, wobei die Sättigung C* 1 bis 20, bevorzugt 2 bis 12 beträgt. Diese Pigmente grenzen sich damit deutlich von bekannten Eisenoxidpigmenten ab. Zur Beurteilung des Aufhellverhaltens wurden die Restfarbabstände der erfindungsgemäßen Pigmente zu handelsüblichen Umbren bei verschiedenen Aufhellungen bestimmt. Das erfindungsgemäße Pigment zeigt sowohl im Purton als auch bei verschiedenen Aufhellungen sehr geringe Farbabstände zu den natürlichen Umbren.

Gegenstand der Erfindung ist auch ein Verfahren zur Herstellung der erfindungsgemäßen Pigmente. Sie werden dadurch erhalten, daß ein synthetisches Magnetitschwarz ($Fe_3O_4$) und mindestens ein synthetisches Maghämitbraun ($\gamma$-$Fe_2O_3$) oder Hämatitrot ($\alpha$-$Fe_2O_3$) und zusätzlich ein synthetisches Goethitgelb ($\alpha$-FeOOH) und/oder ein Lepidokrokitorange ($\gamma$-FeOOH) gemischt und gegebenenfalls gemeinsam aufgemahlen werden. Die Komponenten können auch zunächst separat gemahlen und dann gemischt werden. Zur Mahlung werden die Ofenklinker bzw. die getrockneten Pigmente verwendet, die nach verschiedenen Verfahren erhältlich sind.

Das Mischen der Komponenten erfolgt in üblichen Mischern, wie Wurf-, Schnecken- oder Intensivmischern. Zur Mahlung können bevorzugt Pendelmühlen, Feinprallmühlen, Gutbettwalzenmühlen oder Strahlmühlen verwendet werden. Zur Bestimmung der Mahlgüte wird der Siebrückstand nach DIN 53 195 und der Dispergierzustand nach DIN ISO 1524 bestimmt.

Bevorzugte Pigmente zeigen Siebrückstände von weniger als 0,002 %. Die Grindometerwerte sind Kleiner als 40 $\mu$m, bevorzugt <30 $\mu$m.

Für die Mischungen wurden handelsübliche Eisenoxidschwarzpigmente in der Form von Magnetit, Rotpigmente in der Form von Hämatit, Gelbpigmente in der Form von Goethit und/oder Lepidocrocit sowie ein Braunpigment in der Form von Maghämit ($\gamma$-$Fe_2O_3$) verwendet. Pigmente mit einem neutralen, der natürlichen Umbra entsprechenden Aufhellverfahren wurden bevorzugt bei Mischungen erhalten, die als Hauptkomponente ein Eisenoxidschwarz und als Nebenkomponenten ein Eisenoxidbraun in der Form von Maghämit, ein Eisenoxidrot in der Form von Hämatit sowie ein Eisenoxidgelb in der Form von Goethit enthalten.

Die erfindungsgemäßen Pigmente sind farbstark und zeigen gegenüber natürlichen Umbren Farbstärken von 100 bis 160 %. Die spezifische Oberfläche der erfindungsgemäßen Pigmente nach der BET-Methode beträgt 10 bis 30, bevorzugt 15 bis 20 $m^2$/g (DIN 66 131 Stickstoff-1-Punkt-Methode).

Die erfindungsgemäßen Pigmente sind in Bindemitteln, wie sie zur Herstellung von Mehrzweckabtönpasten verwendet werden, gut dispergierbar. Besonders vorteilhaft ist der im Vergleich zu natürlichen Umbren geringere Bindemittelbedarf und der hohe Festkörpergehalt der hergestellten Pasten.

Gegenstand der Erfindung ist auch die Verwendung des erfindungsgemäßen Pigmentes zur Herstellung von Farben und Lacken, wie Voll- und Abtönfarben und die Verwendung in Mehrzweckabtönpasten, ebenso die Verwendung zur Einfärbung von Baustoffen.

Im folgenden wird die Erfindung beispielhaft erläutert, ohne daß hierin eine Einschränkung zu sehen ist.

Vergleichsbeispiele

In den Vergleichsbeispielen V1 bis 4 werden handelsübliche, natürliche, ungebrannte Umbren hinsichtlich ihrer Eigenschaften untersucht. In den Tabellen 1.1, 1.2 und 1.3 sind die Ergebnisse dieser Untersuchungen wiedergegeben,

Tabelle 1.1

| Gehalte und physikalische Kenngrößen natürlicher ungebrannter Umren | | | | |
|---|---|---|---|---|
| | Vergleichsbeispiele | | | |
| | 1 | 2 | 3 | 4 |
| % $Fe_2O_3$ | 40,0 | 47,6 | 47,4 | - |
| % $Mn_2O_3$ | 6,9 | 9,5 | 6,6 | - |
| % $SiO_2$ | 21,4 | 13,3 | 20,8 | - |
| % $Al_2O_3$ | 3,3 | - | 3,5 | 3,6 |
| % Quarz, kristallin | 1,3 | 0,4 | - | 0,9 |
| spez. Oberfläche, $m^2/g$ | 64 | - | 82 | 103 |
| Ölzahl, g/100 g | 53 | - | - | 40 |
| - = nicht bestimmt | | | | |

Tabelle 1.2

| Farbwerte der natürlichen Umbren des Vergleichsbeispiels 1 bei verschiedenen Aufhellungen | | | | | |
|---|---|---|---|---|---|
| Aufhellung Pigment: $TiO_2$ | L* | a* | b* | C* | h |
| Purton | 26,5 | 0,6 | 1,7 | 1,8 | 70,6 |
| 1:1 | 50,5 | 1,0 | 5,4 | 5,5 | 80,1 |
| 1:2 | 50,5 | 0,9 | 5,4 | 5,4 | 80,1 |
| 1:3,33 | 58,1 | 0,6 | 4,0 | 4,0 | 81,5 |
| 1:5 | 63,0 | 0,5 | 3,7 | 3,7 | 82,3 |
| 1:7 | 66,9 | 0,4 | 3,3 | 3,3 | 83,1 |
| 1:15 | 74,2 | 0,4 | 2,9 | 3,0 | 82,3 |
| 1:30 | 80,2 | 0,3 | 2,3 | 2,3 | 81,9 |

Tabelle 1.3

| Farbwerte der natürlichen Umbren aus den Vergleichsbeispielen 1-4 im Purton und bei der Aufhellung 1:10 | | | | | |
|---|---|---|---|---|---|
| Vergleichsbeispiel | L* | a* | b* | C* | h |
| V1 Purton | 26,5 | 0,6 | 1,7 | 1,8 | 70,6 |
| V2 Purton | 28,0 | 1,7 | 3,5 | 3,5 | 64,6 |
| V3 Purton | 26,6 | 0,3 | 2,3 | 2,3 | 82,4 |
| V4 Purton | 26,5 | 1,0 | 2,6 | 2,8 | 69,0 |
| V1 Aufhellung | 70,7 | 0,4 | 3,0 | 3,9 | 82,4 |
| V2 Aufhellung | 72,0 | 2,0 | 11,1 | 11,3 | 80,0 |
| V3 Aufhellung | 71,7 | 0,7 | 4,2 | 4,3 | 80,5 |
| V4 Aufhellung | 70,8 | 1,7 | 4,8 | 5,1 | 70,5 |

Beispiele

Für die Beispiele wurden verschiedene handelsübliche Pigmente miteinander gemischt. Für einige Mischungen wurde auch Maghämitbraun, wie es in der DE-A 3 820 499 beschrieben ist, verwendet.

Zur Herstellung der Mischungen wurden die Komponenten zusammengegeben, homogenisiert und im Dismembrator bzw. in einer Scheibenschwingmühle miteinander vermahlen. Die Zusammensetzungen der Mischungen sind in der Tabelle 2.1 angegeben.

Tabelle 2.1:

Zusammensetzung der Mischungen aus den Beispielen 1-10

Beispiel     Mischkomponenten, Anteile in Gew.-% Bayferrox[®*)]

| Beispiel | 318 | 930 | 415 | 110 | 943 | Maghämitbraun |
|---|---|---|---|---|---|---|
| 1 | 70 | 4 | | - | - | 26 |
| 2 | 70 | - | 4 | - | - | 26 |
| 3 | 59 | - | 10 | - | - | 40 |
| 4 | 40 | - | 20 | 10 | - | 30 |
| 5 | 50 | - | 30 | 10 | - | 10 |
| 6 | 40 | - | - | 20 | - | 40 |
| 7 | 10 | - | 10 | 20 | - | 60 |
| 8 | 55 | - | 40 | 5 | - | - |
| 9 | 58 | - | 37,5 | 4,5 | - | - |
| 10 | 60 | - | 30 | 5 | 5 | - |

*) Handelsprodukt der BAYER AG

* Bayferrox 318 ist ein synthetisches Magnetitschwarz ($Fe_3O_4$). Bayferrox 930 und 415 sind synthetische Goethitgelbpigmente ($\alpha$-FeOOH). Bayferrox 110 ist ein synthetisches Hämatitrot ($\alpha$-$Fe_2O_3$). Bayferrox 943 ist ein synthetisches Lepidokrokitorange ($\gamma$-FeOOH).

Tabelle 2.2

| Farbwerte der Beispiele 1-10 im Purton | | | | | |
|---|---|---|---|---|---|
| Beispiel | L* | a* | b* | C* | h |
| 1 | 27,5 | 0,6 | 2,8 | 2,9 | 77,9 |
| 2 | 27,2 | 0,9 | 3,5 | 3,6 | 76,6 |
| 3 | 30,0 | 2,4 | 6,6 | 7,0 | 70,0 |
| 4 | 30,0 | 1,9 | 6,2 | 6,5 | 73,0 |
| 5 | 28,8 | 0,6 | 4,1 | 4,1 | 81,7 |
| 6 | 28,7 | 2,1 | 4,9 | 5,3 | 66,8 |
| 7 | 32,2 | 5,0 | 9,8 | 11,0 | 63,0 |
| 8 | 32,9 | 1,8 | 10,1 | 10,3 | 79,9 |
| 9 | 29,5 | 1,1 | 5,6 | 5,7 | 78,9 |
| 10 | 29,2 | 1,1 | 5,5 | 5,6 | 78,7 |

Tabelle 2.3

| Farbwerte der Beispiele 1 - 10 in der Aufhellung 1:10 | | | | | |
|---|---|---|---|---|---|
| Beispiel | L* | a* | b* | C* | h |
| 1 | 67,3 | 0,8 | 3,3 | 3,4 | 76,4 |
| 2 | 68,6 | 1,3 | 3,2 | 3,5 | 67,9 |
| 3 | 70,4 | 2,9 | 7,1 | 7,7 | 67,8 |
| 4 | 70,1 | 2,4 | 6,9 | 7,3 | 70,8 |
| 5 | 70,3 | 0,8 | 4,2 | 4,3 | 79,2 |
| 6 | 67,3 | 2,9 | 5,6 | 6,3 | 62,6 |
| 7 | 69,1 | 5,4 | 11,3 | 12,5 | 64,6 |
| 8 | 74,0 | 1,3 | 7,7 | 7,8 | 80,4 |
| 9 | 71,3 | 1,0 | 3,7 | 3,8 | 74,9 |
| 10 | 71,8 | 1,1 | 3,5 | 3,7 | 78,7 |

Tabelle 2.4

| Farbwerte des Beispiels 1 bei verschiedenen Aufhellungen | | | | | |
|---|---|---|---|---|---|
| Aufhellung | L* | a* | b* | C* | h |
| Purton | 27,5 | 0,60 | 2,8 | 2,9 | 77,9 |
| 1:2 | 47,2 | 1,0 | 2,4 | 2,6 | 68,3 |
| 1:5 | 58,7 | 0,9 | 3,3 | 3,4 | 74,7 |
| 1:7 | 62,6 | 0,8 | 3,2 | 3,3 | 76,0 |
| 1:15 | 70,2 | 0,7 | 3,0 | 3,1 | 77,0 |
| 1:30 | 76,8 | 0,6 | 2,8 | 2,9 | 77,7 |

Tabelle 2.5

| Farbwerte des Beispiels 9 bei verschiedenen Aufhellungen | | | | | |
|---|---|---|---|---|---|
| Aufhellung | L* | a* | b* | C* | h |
| Purton | 29,5 | 1,1 | 5,6 | 5,7 | 78,9 |
| 1:10 | 71,3 | 1,0 | 3,7 | 3,8 | 74,9 |
| 1:20 | 77,7 | 1,0 | 3,2 | 3,4 | 72,6 |
| 1:30 | 80,9 | 1,0 | 2,9 | 3,1 | 71,0 |

Tabelle 2.6

| Farbabstände einiger Pigmentmischungen bei der Aufhellung 1:10 aus den Beispielen 1 - 10 zur natürlichen Umbra aus dem Vergleichsbeispiel 1 | | | | |
|---|---|---|---|---|
| Beispiel | Farbstärke (%) | Δa* | Δb* | ΔC* |
| 1 | 151 | 0,3 | 0,1 | 0,1 |
| 2 | 154 | 0,5 | -0,9 | -0,6 |
| 9 | 107 | 0,1 | 0,2 | 0,2 |

Tabelle 2.7

| Farbabstände der Pigmentmischungen der Beispiele 1 und 2 zur natürlichen Umbra des Vergleichsbeispiels 1 bei verschiedenen Aufhellungen (experimenteller Helligkeitsangleich) | | | | |
|---|---|---|---|---|
| Aufhellung | $\Delta L^*$ | $\Delta a^*$ | $\Delta b^*$ | $\Delta C^*$ |
| Beispiel 1 | | | | |
| 1:3 | 0,0 | 0,4 | -1,1 | -0,9 |
| 1:5 | 0,0 | 0,5 | -0,6 | -0,4 |
| 1:10 | 0,0 | 0,4 | 0,9 | 0,1 |
| 1:15 | 0,0 | 0,4 | -0,2 | -0,1 |
| 1:20 | 0,0 | 0,4 | 0,2 | 0,3 |
| 1:30 | 0,0 | 0,3 | 0,3 | 0,4 |
| Beispiel 2 | | | | |
| Purton | 0,8 | 0,1 | 1,1 | 1,1 |
| 1:5 | 0,0 | 0,3 | 0,1 | 0,2 |
| 1:10 | 0,0 | 0,3 | 0,2 | 0,3 |
| 1:20 | 0,0 | 0,2 | 0,5 | 0,35 |
| 1:30 | 0,0 | 0,2 | 0,4 | 0,4 |

Tabelle 2.8

| Gehalte der Mischungen aus den Beispielen 1 - 10 | | | | |
|---|---|---|---|---|
| Beispiel | % $Fe_2O_3$ | %Mn | % Quarz kristallin | % wasserlösliche Salze |
| 1 | 94 | | < 0,1 | 0,8 |
| 2 | 94 | 0,5 | < 0,1 | 0,9 |
| 3 | 93 | | < 0,1 | - |
| 4 | 92 | | < 0,1 | - |
| 5 | 91 | | < 0,1 | - |
| 6 | 95 | | < 0,1 | - |
| 7 | 94 | | < 0,1 | - |
| 8 | 89 | | < 0,1 | 0,5 |
| 9 | 90 | | < 0,1 | 0,4 |
| 10 | 90 | | < 0,1 | - |
| - = nicht bestimmt | | | | |

Tabelle 2.9

| Weitere Kenngrößen der hergestellten Mischungen aus den Beispielen 1 - 10 | | |
|---|---|---|
| Beispiel | $S_{BET}$ m²/g | Ölzahl g/100 g |
| 1 | 14 | 16 |
| 2 | 14 | 15 |
| 3 | 15 | 23 |
| 4 | 15 | 25 |
| 5 | 14 | 25 |
| 6 | 14 | 25 |
| 7 | 19 | 28 |
| 8 | 14 | 26 |
| 9 | 14 | 26 |
| 10 | | 26 |

Beispiel 1

Die Pigmentmischung des Beispiels 1 zeigt sowohl im Purton als auch in verschiedenen Aufhellungen geringe Farbabstände zum Pigment des Vergleichsbeispiels 1 (s. Tabellen 1.2 uns 2.4) und ist mit einer Farbstärke von 151 % deutlich farbstärker als dieses. Die Pigmentmischung enthält weniger als 0,1 % kristallinen Quarz und 0,8 % wasserlösliche Salze. Die Ölzahl und die spezifische Oberfläche sind mit 16 g/100 g und 14 m²/g deutlich geringer als bei den natürlichen, ungebrannten Umbren.

Beispiel 2

Die Pigmentmischung entspricht in ihren Eigenschaften dem Beispiel 1, enthält aber einen geringeren Teil löslicher Salze.

Beispiele 3-7

Die Pigmentmischungen der Beispiele 3-9 zeigen sowohl im Pirton als auch in der Aufhellung 1:10 einen höheren Gelbanteil und entsprechen somit den natürlichen, ungebrannten Umbren mit einem erhöhten Gelbstich, wie sie etwa durch das Vergleichsbeispiel 2 repräsentiert sind.

Beispiele 8-10

Die Pigmente dieser Beispiele entsprechen koloristisch der natürlichen Umbra des Vergleichsbeispiels 1. Die Farbstarke beträgt etwa 107 %.

Beispiel 11

In einem Wurfmischer wurden eine Mischung von 70 % Bayferrox 318, 4 % Bayferrox 30 und 26 % Maghämitbraun gemischt. Die Mischung wurde auf einer Feinprallmühle gemahlen. Der Siebrückstand betrug weniger als 0,001 %. Der Grindometerwert beträgt 30 $\mu$m.

Beispiel 12

In einem Wurfmischer wurden 55 % Bayferrox 318, 40 % Bayferrox 415 und 5 % Bayferrox 110 (Ofenklinker) gemischt und auf einer Pendelmühle gemahlen. Der Siebrückstand beträgt 0,001 % und der Grindometerwert 35 $\mu$m.

Die Pigmente der Beispiele 1 und 2 wurden Farbmetrisch untersucht. Sie zeigen nur geringe Farbabweichungen von den nach den Beispielen 1 und 8 hergestellten Pigmenten.

**Patentansprüche**
**Patentansprüche für folgende Vertragsstaaten : DE, FR, GB, IT, NL**

1. Synthetisches Pigment mit dem Farbton der natürlichen ungebrannten Umbra, mit einem Eisenoxidgehalt gerechnet als $Fe_2O_3$ von mehr als 85 Gew.-% und einem Gehalt an kristalliner Kieseläure von weniger als 0,1 Gew.-%, bestehend aus einem Gemisch von synthetischem Magnetitschwarz ($Fe_3O_4$), mindestens einem synthetischen Maghämitbraun ($\gamma$-$Fe_2O_3$) oder Hämatitrot ($\alpha$-$Fe_2O_3$) und zusätzlich einem synthetischen Goethitgelb ($\alpha$-FeOOH) und/oder Lepikrokitorange ($\gamma$-FeOOH), mit einem Farbton, beschrieben in CIELAB-Einheiten durch den Farbwinkel h und die Sättigung C* wobei für h im Purton und für die Aufhellung mit $TiO_2$ im Verhältnis von 1:10 Werte im Bereich von 60 bis 90 liegen, wobei C* 1 bis 20 beträgt.

2. Synthetisches Pigment gemäß Anspruch 1, dadurch gekennzeichnet, daß als wesentliche Bestandteile im Gemisch Magnetitschwarz in Mengen von 10 bis 80 Gew.-%, Hämatitrot in Mengen von 0 bis 30 Gew.-%, Maghämitbraun in Mengen von 0 bis 60 Gew.-%, Goethitgelb in Mengen von 0 bis zu 40 Gew.-% und Lepidokrokitorange in Mengen von 0 bis zu 10 Gew.-% vorhanden sind.

3. Synthetisches Pigment gemäß einem oder mehreren der Ansprüche 1 oder 2, dadurch gekennzeichnet, daß im Gemisch 50 bis 75 Gew.-% Magnetitschwarz, 1 bis 40 Gew.-% Goethitgelb, 0 bis 10 Gew.-% Hämatitrot und 0 bis 30 Gew.-% Maghämitbraun enthalten sind.

4. Synthetisches Pigment gemäß einem oder mehreren der Ansprüche 1 bis 3, dadurch gekennzeichnet, daß der Gehalt löslicher Salze weniger als 1,0 Gew.-%, bevorzugt 0,5 bis 0,9 Gew.-% beträgt.

5. Synthetisches Pigment gemäß einem oder mehreren der Ansprüche 1-4, dadurch gekennzeichnet, daß die Farbsättigung C* 2 bis 12 beträgt.

6. Synthetisches Pigment gemäß einem oder mehreren der Ansprüche 1 bis 5, dadurch gekennzeichnet, daß es eine spezifische Oberfläche ($S_{BET}$) von 10 bis 30, bevorzugt 15 bis 20 $m^2/g$ aufweist.

7. Verwendung der synthetischen Pigmente gemäß einem oder mehreren der Ansprüche 1 bis 6 zur Herstellung von Farben und Lacken, wie Mehrzweckabtönpasten, Voll- und Abtönfarben.

8. Verwendung der synthetischen Pigmente gemäß einem oder mehreren der Ansprüche 1 bis 6 zur Einfärbung von Baustoffen.

**Patentansprüche für folgenden Vertragsstaat : ES**

1. Verfahren zur Herstellung eines synthetischen Pigments mit dem Farbton der natürlichen ungebrannten Umbra, welches einen Eisenoxidgehalt, gerechnet als $Fe_2O_3$, von mehr als 85 Gew.-% und einen Gehalt an kristalliner Kieselsäure von weniger als 0.1 Gew.-% aufweist, dadurch gekennzeichnet, daß es durch Mischen und gegebenenfalls gemeinsamen Aufmahlen von synthetischem Magnetitschwarz ($Fe_3O_4$), mindestens einem synthetischen Maghämitbraun ($\gamma$-$Fe_2O_3$) oder Hämatitrot ($\alpha$-$Fe_2O_3$) besteht und zusätzlich ein synthetisches Goethitgelb ($\alpha$-FeOOH) und/oder Lepidkrokitorange ($\gamma$-FeOOH) erhalten wird.

2. Verfahren gemäß Anspruch 1, dadurch gekennzeichnet, daß als wesentliche Bestandteile im Gemisch Magnetitschwarz in Mengen von 10 bis 80 Gew.-% Hämatitrot in Mengen von 0 bis 30 Gew.-%, Maghämitbraun in Mengen von 0 bis 60 Gew.-%, Goethitgelb in Mengen von 0 bis zu 40 Gew.-% und Lepidokrokitorange in Mengen von 0 bis zu 10 Gew.-% vorhanden sind.

3. Verfahren gemäß einem der Ansprüche 1 oder 2, dadurch gekennzeichnet, daß im Gemisch 50 bis 75 Gew.-% Magnetitschwarz, 1 bis 40 Gew.-% Goethitgelb, 0 bis 10 Gew.-% Hämatitrot und 0 bis 30 Gew.-% Maghämitbraun enthalten sind.

4. Verfahren gemäß einem oder mehreren der Ansprüche 1 bis 3, dadurch gekennzeichnet, daß der Gehalt löslicher Salze weniger als 1,0 Gew.-%, bevorzugt 0,5 bis 0.9 Gew.-% beträgt.

**5.** Verfahren gemäß einem oder mehreren der Ansprüche 1 bis 4, dadurch gekennzeichnet, daß der Farbton, beschrieben in CIELAB-Einheiten durch den Farbwinkel h und die Sättigung C*, für h im Purton und für die Aufhellung mit $TiO_2$ im Verhältnis von 1:10 Werte von 60 bis 90 annehmen kann, wobei C* 1 bis 20, bevorzugt 2 bis 12, beträgt.

**6.** Verfahren gemäß einem oder mehreren der Ansprüche 1 bis 5, dadurch gekennzeichnet, daß es eine spezifische Oberfläche ($S_{BET}$) von 10 bis 30, bevorzugt 15 bis $20 m^2/g$ aufweist.

**7.** Verwendung der synthetischen Pigmente gemäß einem oder mehreren der Ansprüche 1 bis 6 zur Herstellung von Farben und Lacken, wie Mehrzweckabtönpasten, Voll- und Abtönfarben.

**8.** Verwendung der synthetischen Pigmente gemäß einem oder mehreren der Ansprüche 1 bis 6 zur Einfärbung von Baustoffen.

**Claims**
**Claims for the following Contracting States : DE, FR, GB, IT, NL**

**1.** A synthetic pigment having the color of natural uncalcined umber which has an iron content, expressed as $Fe_2O_3$, of more than 85 % by weight and a content of crystalline silica of less than 0,1 % by weight, which consist of a mixture of synthetic magnetite black ($Fe_3O_4$) and at least one synthetic maghemite brown ($\gamma$-$Fe_2O_3$) or hematite red ($\alpha$-$Fe_2O_3$), with or without at least one synthetic goethite yellow ($\alpha$-FeOOH) or lepidocrocite orange ($\gamma$-FeOOH), wherein the color, expressed in CIELAB units by the color angle h and the saturation C*, has values of 60 to 90 for h both in the pure form and in the form lightened with $TiO_2$ in a ratio of 1:10 and the saturation C* value is from 1 to 20.

**2.** A synthetic pigment as claimed in claim 1 which contains magnetite black in quantities of 10 to 80 % by weight, hematite red in quantities of 0 to 30 % by weight, maghemite brown in quantities of 0 to 60 % by weight, goethite yellow in quantities of 0 to 40 % by weight and lepidocrocite orange in quantities of 0 to 10 % by weight as constituents of the mixture.

**3.** A synthetic pigment as claimed in claims 1 or 2, which contains 50 to 75 % by weight magnetic black, 1 to 40 % by weight goethite yellow, 0 to 10 % by weight hematite red and 0 to 30 % by weight maghemite brown.

**4.** A synthetic pigment as claimed in claims 1 - 3, which contains less than 1,0 % by weight soluble salts and preferred 0,5 to 0,9 % by weight.

**5.** A synthetic pigment as claimed in claims 1 - 4 wherein the saturation C* value is from 2 to 12.

**6.** A synthetic pigment as claimed in claims 1 - 5 which has a specific surface ($S_{BET}$) of 10 to 30 $m^2/g$ preferred 15 to 20 $m^2/g$.

**7.** In an improved pigmented paint or lacquer, the improvement comprises said paint or lacquer containing a pigmenting amount of synthetic pigment as claimed in claims 1 to 6.

**8.** In an improved building material containing a pigment, the improvement comprises said pigment being a pigment as claimed in claims 1 to 6.

**Claims for the following Contracting State : ES**

**1.** A process for producing a synthetic pigment having the color of natural uncalcined umber which has an iron content, expressed as $Fe_2O_3$, of more than 85 % by weight and a content of crystalline silica of less than o,1 % by weight, charakterized by mixing and optionally grinding togehter a synthetic magnetite black ($Fe_3O_4$) and at least one synthetic maghemite brown ($\gamma$-$Fe_2O_3$) or hematite red ($\alpha$-$Fe_2O_3$), with or without at least one synthetic goethite yellow ($\alpha$-FeOOH) or lepidocrocite orange ($\gamma$-FeOOH).

2. A process as claimed in claim 1 wherein the main components are magnetite black in quantities of 10 to 80 % by weight, hematite red in quantities of 0 to 30 % by weight, maghemite brown in quantities of 0 to 60 % by weight, goethite yellow in quantities of 0 to 40 % by weight and lepidobrocite orange in quantities of 0 to 10 % by weight constituents of the mixture.

3. A process as claimed in claims 1 or 2, wherein 60 to 75 % by weight magnetic black, 1 to 40 % by weight goethite yellow, 0 to 10 % by weight hematite red and 0 to 30 % by weight maghemite brown, are set in for mixing.

4. A process as claimed in claim 1-3, wherein the synthetic pigment contains less than 1,0 % by weight soluble salts and preferred 0,5 to 0,9 % by weight.

5. A process as claimed in claims 1-4, wherein the color, expressed in CIELAB units by the color angle h and the saturation C*, has values of 60 to 90 for h both in the pure form and in the form lightened with $TiO_2$ in a ratio of 1:10 and the saturation C* value is from 1 to 20, preferred 2 to 12.

6. A process as claimed in claims 1-5 wherein the synthetic pigment has a specific surface ($S_{BET}$) of 10 to 30 $m^2$/g preferred 10 to 20 $m^2$/g.

7. In an improved pigmented paint or lacquer, the improvement comprises said paint or lacquer containing a pigmenting amount of synthetic pigment as claimed in claims 1 to 6.

8. In an improved building material containing a pigment, the improvement comprises said pigment being a pigment as claimed in claims 1 to 6.

## Revendications
## Revendications pour les Etats contractants suivants : DE, FR, GB, IT, NL

1. Pigment synthétique de couleur naturelle de la terre d'Umbra non-brûlée, avec un contenu d'oxyde de fer sous forme de $Fe_2O_3$ supérieur à 85 % du poids et avec un contenu d'acide silicique cristalline inférieur à 0,1 % du poids, se composant d'une mélange de: Noir magnétite synthétique ($Fe_3O_4$), d'au moins un brun maghémite synthétique ($\gamma$-$Fe_2O_3$) ou rouge hématite ($\alpha$-$Fe_2O_3$) et en plus d'un jaune géothite synthétique ($\alpha$-FeOOH) et/ou d'un orange lépidokrokite ($\gamma$-FeOOH); ayant une tonalité qu'on mesure en unités CIElab par l'angle h et la saturation C*, les valeurs h étant dans le ton pur et dans la dégradation evec $TiO_2$ à 1 : 10 dans la fourchette de 60 à 90, C* se situant entre 1 et 20.

2. Pigment synthétique selon la revendication N° 1, qui se présente de façon à ce que les composants majeurs du mélange soient: noir magnétite de l'ordre de 10 à 80 % du poids, rouge hématite entre 0 et 30 % du poids, brun maghémite entre 0 et 60 % du poids, jaune géothite entre 0 et 40 % du poids et orange lépidokrokite entre 0 et 10 % du poids.

3. Pigment synthéthique selon l'une des revendications 1 et/ou 2, caractérisé par la présence de 50 à 75 % du poids noir de magnétite, 1 à 40 % du poids jaune géothite, 0 à 10 % du poids rouge hématite et 0 à 30 % du poids brun maghémite.

4. Pigment synthétique selon un ou plusieurs l'une des revendications 1 - 3, caractérisé par la présence des sels solubles de moins de 1,0 % du poids; un contenu de 0,5 à 0,9 % du poids étant prédominant.

5. Pigment synthétique selon un ou plusieurs l'une des revendications 1 - 4; caractérisé par une saturation de couleur C* entre 2 et 12.

6. Pigment synthétique selon un ou plusieurs l'une des revendications 1 - 5, caractérisé par une surface spécifique ($S_{BET}$) de 10 à 30 $m^2$/g; une surface spécifique de 15 à 20 $m^2$/g ètant prédominante.

7. Utilisation des pigments synthétiques selon les l'une des revendications 1 - 6 pour la fabrication des colorants et peintures, comme des concentrés de couleurs multi-usage, peintures à ton pur ou ton dégradé.

8. Utilisation des pigments synthétiques selon l'une des revendications 1 - 6 pour la coloration des produits pour le bâtiment.

**Revendications pour l'Etat contractant suivant : ES**

1. Un procédé pour la fabrication d'un pigment synthétique de couleur naturelle de la terre d'Umbra non-brûlée, avec un contenu d'oxyde de fer sous forme de $Fe_2O_3$ supérieur à 85 % du poids et avec un contenu d'acide silicique cristalline inférieur à 0,1 % du poids, se composant d'une mélange de: Noir magnétite synthétique ($Fe_3O_4$), d'au moins un brun maghémite synthétique ($\gamma$-$Fe_2O_3$) ou rouge hématite ($\alpha$-$Fe_2O_3$),et en plus d'un jaune géothite synthetique ($\alpha$-FeOOH) et/ou d un orange lépidokroki-te ($\gamma$-FeOOH).

2. Procédé selon la revendication N° 1, qui se présente de façon à ce que les composants majeurs du mélange soient: noir magnétite de l'ordre de 10 à 80 % du poids, rouge hématite entre 0 et 30 % du poids, brun maghémite entre 0 et 60 % du poids, jaune géothite entre 0 et 40 % du poids et orange lépidokrokite entre 0 et 10 % du poids.

3. Procédé selon l'une des revendications 1 et/ou 2, caractérisé par la présence de 50 à 70 % du poids noir de magnétite, 1 à 40 % du poids jaune géothite, 0 à 10 % du poids rouge hématite et 0 à 30 % du poids brun maghémite.

4. Procédé selon une ou plusieurs des revendications 1 - 3, caractérisé par la présence des sels solubles de moins de 1,0 % du poids; un contenu de 0,5 à 0,9 % du poids étand prédominant.

5. Procédé une ou plusieurs des revendications 1 - 4; caractérisé par tonalité qu'on mesure en unités CIElab par l'angle h et la saturation C*, les valeurs h étant dans le ton pur et dans la dégradation evec $TiO_2$ à 1 : 10 dans la fourchette de 60 à 90, C* se situant entre 1 et 20.

6. Procédé selon une ou plusieurs des revendications 1 - 5, caractérisé par une surface spécifique ($S_{BET}$) de 10 à 30 $m^2$/g; une surface spécifique de 15 à 20 $m^2$/g ètand prédominant.

7. Utilisation des pigments synthétiques selon les l'une des revendications 1 - 6 pour la fabrication des colorants et peintures, comme des concentrés des couleurs multi-usage, peintures à ton pur ou ton dégradé.

8. Utilisation des pigments synthétiques selon l'une des revendications 1 - 6 pour la coloration des produits pour le bâtiment.